# EUROPEAN PATENT APPLICATION

(11) **EP 4 572 439 A1**
(43) Date of publication of application: **18.06.2025**
(21) Application number: 22954548.8
(22) Date of filing: 11.08.2022
(51) Int. Cl.: H04W 64/00

(54) **COMMUNICATION METHOD AND APPARATUS, STORAGE MEDIUM, AND CHIP**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/111927
(87) International publication number: WO 2024/031582

(57) **Abstract**

The present disclosure relates to a communication method and apparatus, a storage medium, and a chip. The method comprises: sending first information to a location management function device, the first information being used for determining location performance of an AI model deployed by a terminal. The method is used, thereby facilitating acquiring the location performance of the AI model deployed by the terminal.

## Description

### TECHNICAL FIELD

The present disclosure relates to a field of communication technology, and more particularly to a communication method, an apparatus, a storage medium and a chip.

### BACKGROUND

With the development of communication technology, terminal location services based on AI (Artificial Intelligence) have been proposed. In AI-based terminal location services, how to determine location performance of the AI model has become a problem that needs to be addressed.

### SUMMARY

To overcome the above-mentioned problems in the related art, the present disclosure provides a communication method, an apparatus, a storage medium, and a chip.

According to a first aspect of the embodiments of the present disclosure, a communication method is provided, performed by a terminal, and the method includes:

sending first information to a location management function device, where the first information is configured to determine location performance of an AI model deployed by the terminal.

According to a second aspect of the embodiments of the present disclosure, a communication method is provided, performed by a location management function device, and the method includes:
receiving first information sent by a terminal; and
determining, according to the first information, location performance of an AI model deployed by the terminal.

According to a third aspect of the embodiments of the present disclosure, a communication apparatus is provided, applied to a terminal, and the apparatus includes:
a first sending module, configured to send first information to a location management function device, where the first information is configured to determine location performance of an AI model deployed by the terminal.

According to a fourth aspect of the embodiments of the present disclosure, a communication apparatus is provided, applied to a location management function device, and the apparatus includes:
a third receiving module, configured to receive first information sent by a terminal;
a determination module, configured to determine location performance of an AI model deployed by the terminal according to the first information.

According to a fifth aspect of the embodiments of the present disclosure, a communication apparatus is provided and includes:
a processor;
a memory for storing executable instructions of the processor;
where the processor is configured to perform the steps of the communication method provided in the first aspect of the present disclosure.

According to a sixth aspect of the embodiments of the present disclosure, a communication apparatus is provided and includes:
a processor;
a memory for storing executable instructions of the processor;
where the processor is configured to perform the steps of the communication method provided in the second aspect of the present disclosure.

According to a seventh aspect of the present disclosure, a computer-readable storage medium is provided, and the computer-readable storage medium stores computer program instructions, which, when executed by a processor, implement the steps of the communication method provided in the first aspect of the present disclosure.

According to an eighth aspect of the present disclosure, a computer-readable storage medium is provided, and the computer-readable storage medium stores computer program instructions, which, when executed by a processor, implement the steps of the communication method provided in the second aspect of the present disclosure.

According to a ninth aspect of the embodiments of the present disclosure, a chip is provided and includes: a processor and an interface; where the processor is configured to read instructions to execute the steps of the communication method provided in the first aspect of the present disclosure.

According to a tenth aspect of the embodiments of the present disclosure, a chip is provided and includes: a processor and an interface; where the processor is configured to read instructions to execute the steps of the communication method provided in the second aspect of the present disclosure.

It should be understood that the above general description and the following detailed description are merely exemplary and explanatory, and should not be construed as limiting the present disclosure

### BRIEF DESCRIPTION OF THE DRAWINGS

The drawings provided herein are incorporated into and form a part of the specification, illustrating embodiments consistent with the present disclosure, and are used in conjunction with the specification to explain the principles of the present disclosure.
FIG. 1 is a schematic diagram of a communication system according to an exemplary embodiment.
FIG. 2 is a flowchart of a communication method according to an exemplary embodiment.
FIG. 3 is a flowchart of another communication method according to an exemplary embodiment.
FIG. 4 is a flowchart of another communication method according to an exemplary embodiment.
FIG. 5 is a flowchart of another communication method according to an exemplary embodiment.
FIG. 6 is a flowchart of another communication method according to an exemplary embodiment.
FIG. 7 is a flowchart of another communication method according to an exemplary embodiment.
FIG. 8 is a flowchart of another communication method according to an exemplary embodiment.
FIG. 9 is a flowchart of another communication method according to an exemplary embodiment.
FIG. 10 is a flowchart of another communication method according to an exemplary embodiment.
FIG. 11 is a flowchart of another communication method according to an exemplary embodiment.
FIG. 12 is a flowchart of another communication method according to an exemplary embodiment.
FIG. 13 is a flowchart of another communication method according to an exemplary embodiment.
FIG. 14 is a flowchart of another communication method according to an exemplary embodiment.
FIG. 15 is a flowchart of another communication method according to an exemplary embodiment.
FIG. 16 is a flowchart of another communication method according to an exemplary embodiment.
FIG. 17 is a flowchart of another communication method according to an exemplary embodiment.
FIG. 18 is a flowchart of another communication method according to an exemplary embodiment.
FIG. 19 is a flowchart of another communication method according to an exemplary embodiment.
FIG. 20 is a flowchart of another communication method according to an exemplary embodiment.
FIG. 21 is a flowchart of another communication method according to an exemplary embodiment.
FIG. 22 is a block diagram of a communication apparatus according to an exemplary embodiment.
FIG. 23 is a block diagram of a communication apparatus according to an exemplary embodiment.
FIG. 24 is a block diagram of a communication apparatus according to an exemplary embodiment.
FIG. 25 is a block diagram of a communication apparatus according to an exemplary embodiment.

### DETAILED DESCRIPTION

The exemplary embodiments will be described in detail herein, with examples illustrated in the accompanying drawings. In the following description, unless otherwise indicated, the same numbers in different drawings represent the same or similar elements. The embodiments described in the following exemplary embodiments do not represent all embodiments consistent with the present disclosure. Instead, they are merely examples of apparatus and method consistent with certain aspects of the present disclosure, as detailed in the appended claims.

It should be noted that all actions of obtaining signals, information, or data in the present disclosure are performed in compliance with the relevant data protection regulations and policies of the respective country and with the authorization of the respective apparatus owner.

In the description of the present disclosure, the terms such as "first" and "second" are used to distinguish similar objects and should not necessarily be construed as indicating a particular order or sequence. In addition, unless otherwise stated, the same reference numerals in different drawings indicate the same elements.

In the description of the present disclosure, unless otherwise stated, "a plurality of" refers to two or more than two, and other quantifiers have similar meanings. Terms such as "at least one" or "one or more" refer to any combination of these items, including a single item or any combination of multiple items. For example, "at least one of a, b, or c" may refer to: a, b, c, a-b, a-c, b-c, or a-b-c, where a, b, and c may each represent a single item or multiple items. The expression "and/or" describes a relationship between associated objects and may represent three possibilities: for example, "A and/or B" may mean the presence of A alone, the presence of both A and B, or the presence of B alone, where A and B may be singular or plural.

In the embodiments of the present disclosure, although operations are described in a specific order in the drawings, which should not be understood as requiring the operations to be performed in the specific order shown, in a sequential manner, or requiring all of the operations to be performed to obtain the desired result. In a certain context, multitasking and parallel processing may be beneficial. Furthermore, it may also be advantageous to send multiple pieces of information within the same message.

The implementation environment of the embodiments of the present disclosure is introduced below.

The technical solutions of the embodiments of the present disclosure may be applied to various communication systems. These communication systems may include one or more of a 4G (the 4th Generation) communication system, a 5G (the 5th Generation) communication system, and other future wireless communication systems (such as 6G). These communication systems may also include one or more of a Public Land Mobile Network (PLMN), a non-terrestrial network communication system, a Device-to-Device (D2D) communication system, a Machine-to-Machine (M2M) communication system, an Internet of Things (IoT) communication system, a Vehicle-to-Everything (V2X) communication system, or other communication systems.

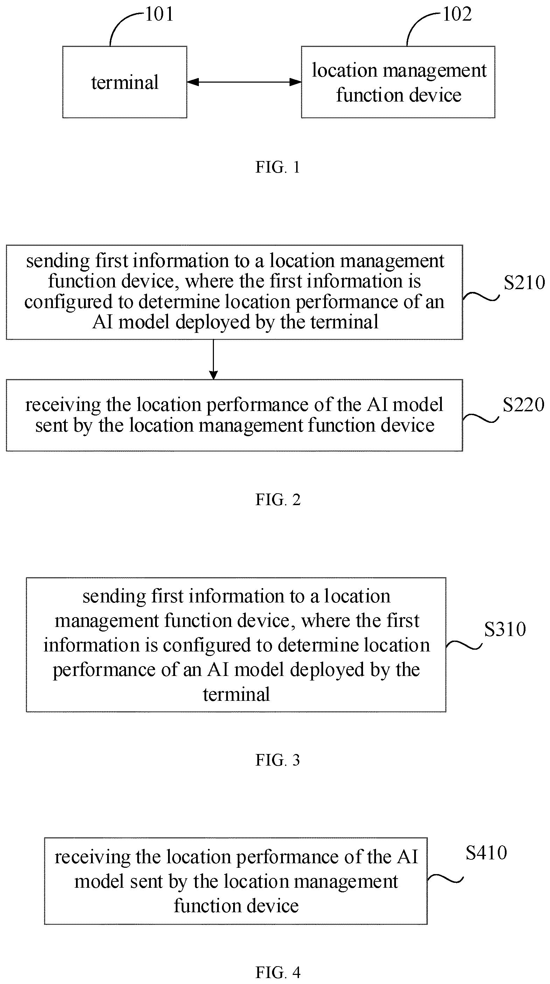

FIG. 1 is a schematic diagram of a communication system according to an exemplary embodiment. As shown in FIG. 1, the communication system may include a terminal 101 and a location management function device 102. This communication system may support 4G (the 4th Generation) network access technologies, such as Long Term Evolution (LTE) access technology, 5G (the 5th Generation) network access technologies, such as New Radio Access Technology (New RAT), or other future wireless communication technologies. It should be noted that, in the communication system, the number of terminals and location management function devices may be one or more. The number of terminal and location management function device shown in FIG. 1 is provided as an example for adaptation in an embodiment, and the present disclosure is not limited thereto.

The terminal in FIG. 1 may be an electronic device that provides voice or data connectivity, and it may also be referred to as a User Equipment (UE), Subscriber Unit, Mobile Station, Station, terminal device, or the like. For example, the terminal may include a smartphone, a smart wearable device, a smart speaker, a smart tablet, a wireless modem, a Wireless Local Loop (WLL) terminal, a Personal Digital Assistant (PDA), Customer Premise Equipment (CPE), and the like. With the development of wireless communication technology, any device that may access a communication system, communicate with the base station of the communication system, or communicate with other objects via the communication system may serve as a terminal in the embodiments of the present disclosure, for example, terminals and vehicles in intelligent transportation systems, household devices in smart homes, electric meter reading devices, voltage monitoring devices in smart grids, environmental monitoring devices, video monitoring devices in intelligent security networks, and cash-registers and the like. The base station in FIG. 1 may also be referred to as an access network device.

The location management function device in FIG. 1 may be used to provide location management functions. For example, the location device may include a Location Management Function (LMF), a Location Management Component (LMC), or a network device with LMF or LMC deployed. For instance, the location device may be a core network device with LMF deployed, an access network device with LMC deployed, or any network device with location function. The present disclosure is not limited thereto.

In addition, in some embodiments, the communication between the terminal and the location management function device may be performed through a base station (not shown in FIG. 1).

FIG. 2 shows a communication method according to an exemplary embodiment, which may be performed by the terminal in the above communication system. As shown in FIG. 2, the method may include:
in S210, first information is sent to a location management function device, where the first information is configured to determine location performance of an AI model deployed by the terminal.

in S220, the location performance of the AI model sent by the location management function device is received.

By using the above method, the terminal may send the first information, which is configured to determine the location performance of the AI model deployed by the terminal, to the location management function device. The location management function device may determine the location performance of the AI model deployed by the terminal according to the first information. The location management function device may then send the determined location performance of the AI model to the terminal, such that the terminal may acquire the location performance of the deployed AI model.

In some embodiments, after acquiring the location performance of the deployed AI model, the terminal may perform subsequent processing. For example, when it is determined that the location performance does not meet a requirement, a parameter of the AI model may be updated, for another example, the deployed AI model may be used to determine location information of the terminal or may be used to determine a location measurement value of the terminal.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In the embodiments of the present disclosure, the AI model for determining the location information of the terminal may be deployed by the terminal, or the AI model for determining the location measurement value for detection of the terminal may be deployed by the terminal. In addition, the traditional location algorithm may also be deployed by the terminal, such as DL-TDOA, multi-RTT, DL-AOD, or E-CID location algorithm and the like. In this way, the terminal may determine the location information of the terminal based on the AI model and determine the location information of the terminal based on the traditional location algorithm according to the deployment of the AI model and the traditional location algorithm, so as to obtain the first sub-information; or the terminal may determine the location measurement value based on the AI model and the location measurement value based on the traditional location algorithm according to the deployment of the AI model and the traditional location algorithm, so as to obtain the second sub-information.

The location measurement value may be, for example, a reference signal arrival time difference (Reference Signal Time Difference, RSTD), a Reference Signal Received Power (RSRP), a positioning Reference Signal Received Path Power (RSRPP), and the like, which are determined based on the deployed traditional location algorithm.

In addition, after determining the location information of the terminal based on the AI model and the location information of the terminal based on the traditional location algorithm, the terminal may further determine information characterizing a difference between the location information of the terminal determined based on the AI model and the location information of the terminal determined based on the traditional location algorithm, so as to obtain the third sub-information.

For example, a distance between the location information of the terminal determined based on the AI model and the location information of the terminal determined based on the traditional location algorithm may be determined as information characterizing the difference.

In addition, after determining the location measurement value of the terminal based on the AI model and determining the location measurement value of the terminal based on the traditional location algorithm, the terminal may further determine information characterizing the difference between the location measurement value of the terminal determined based on the AI model and the location measurement value of the terminal determined based on the traditional location algorithm, so as to obtain the fourth sub-information.

For example, a difference value between the location measurement value of the terminal determined based on the AI model and the location measurement value of the terminal determined based on the traditional location algorithm may be determined as the information characterizing the difference.

In some embodiments, the first information sent by the terminal may at least include fields recording the first sub-information, second sub-information, third sub-information, and fourth sub-information. Thus, when it is necessary to send specific sub-information to the location management function device, a corresponding field is enabled to populate the corresponding sub-information.

In addition, in order to enable the location management function device to distinguish the location information obtained by which algorithm, in some embodiments, each location information included in the first sub-information is associated with a first identifier, and the first identifier indicates a location algorithm used to determine the location information.

For example, the location information determined through the AI model may be tagged with a first identifier which indicates that the location information is determined by the AI model. For another example, the location information determined through a DL-TDOA location algorithm may be tagged with a first identifier, which indicates that the location information is determined by the DL-TDOA location algorithm.

In addition, in order to enable the location management function device to distinguish the location measurement value obtained by which algorithm, in some embodiments, the location measurement value included in the second sub-information and determined based on the AI model is associated with a second identifier, which indicates a location measurement value determined based on the AI model.

In the embodiments of the present disclosure, considering a significant difference in parameter units or orders of magnitudes between different location measurement values, the second identifier may only be associated with the location measurement value determined based on the AI model included in the second sub-information.

Optionally, the location performance may reflect whether the AI model meets the requirement. Thus, in some embodiments, the receiving the location performance of the AI model sent by the location management function device includes:
receiving information, sent by the location management function device, characterizing whether the AI model meets a preset location accuracy; or receiving information, sent by the location management function device, indicating the terminal to stop using the AI model; or receiving information, sent by the location management function device, indicating the terminal to stop replacing the AI model; or receiving information, sent by the location management function device, indicating the terminal to update a parameter of the AI model.

In the embodiments of the present disclosure, whether the AI model meets the requirement may be reflected by any of the following: the information characterizing whether the AI model meets the preset location accuracy, the information indicating the terminal to stop using the AI model, the information indicating the terminal to stop replacing the AI model, or the information indicating the terminal to update the AI model parameter.

FIG. 3 shows a communication method according to an exemplary embodiment, which is performed by a terminal. In this case, as shown in FIG. 3, the method may include:
in S310, first information is sent to a location management function device, where the first information is configured to determine location performance of an AI model deployed by the terminal.

By using the above method, the terminal may send the first information configured to determine the location performance of the AI model deployed by the terminal, to the location management function device, and thus the location management function device may determine the location performance of the AI model deployed by the terminal according to the first information.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In some embodiments, each location information included in the first sub-information is associated with a first identifier, and the first identifier indicates a location algorithm used to determine the location information.

In some embodiments, the location measurement value included in the second sub-information and determined based on the AI model is associated with a second identifier, which indicates a location measurement value determined based on the AI model.

In some embodiments, the terminal may send the first information to the location management function device via an LPP message.

In some embodiments, the terminal may send the first information configured to determine the location performance of the AI model deployed by the terminal, to the location management function device in response to a first request sent by the location management function device.

FIG. 4 shows a communication method according to an exemplary embodiment, which is performed by a terminal. As shown in FIG. 4, the method may include:
in S410, the location performance of the AI model sent by the location management function device is received.

By using the above method, the terminal may acquire the location performance of the AI model deployed by itself from the location management function device.

In some embodiments, the location performance of the AI model sent to the terminal by the location management function device may be obtained in various ways. Optionally, the location management function device may analyze and process the first information after receiving the first information sent by the terminal, to determine the location performance. Optionally, the location performance of the terminal may be acquired from an external application by the location management function device.

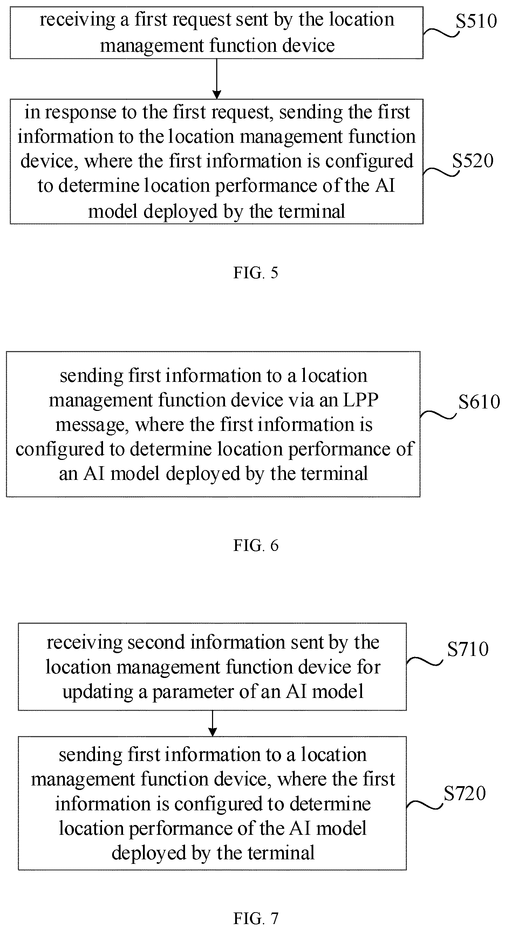

FIG. 5 shows a communication method according to an exemplary embodiment, which is performed by a terminal. As shown in FIG. 5, the method may include:
in S510, a first request sent by the location management function device is received.
in S520, in response to the first request, the first information is sent to the location management function device, where the first information is configured to determine location performance of the AI model deployed by the terminal.

By using the above method, the terminal may send the information, that is configured to determine the location performance of the AI model deployed by the terminal, to the location management function device according to the request sent by the location management function device.

In some embodiments, the first request may include information indicating content of a specific request.

For example, the first request may include information for indicating that the terminal provides at least one of the first sub-information, second sub-information, third sub-information, or fourth sub-information.

In some embodiments, the terminal may receive the first request sent by the location management function device via an LPP message. That is, the location management function device may send the LPP message to the terminal, and the LPP message includes the first request.

Optionally, the LPP message for sending the first request may be an LPP location information request message.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In some embodiments, each location information included in the first sub-information is associated with a first identifier, and the first identifier indicates a location algorithm used to determine the location information.

In some embodiments, the location measurement value included in the second sub-information and determined based on the AI model is associated with a second identifier, which indicates a location measurement value determined based on the AI model.

In some embodiments, the terminal may send the first information to the location management function device via an LPP message.

In some embodiments, the receiving the location performance of the AI model sent by the location management function device includes:

receiving information, sent by the location management function device, characterizing whether the AI model meets a preset location accuracy; or receiving information, sent by the location management function device, indicating the terminal to stop using the AI model; or receiving information, sent by the location management function device, indicating the terminal to stop replacing the AI model; or receiving information, sent by the location management function device, indicating the terminal to update a parameter of the AI model.

In some embodiments, the method of the present disclosure may further include a step of receiving the location performance of the AI model sent by the location management function device.

In the embodiments of the present disclosure, the location management function device may send the location performance of the AI model to the terminal, thereby facilitating the terminal to understand the location performance of the deployed AI model.

It should be noted that, in some embodiments, the step of receiving the location performance of the AI model sent by the location management function device may be included in step S510. That is, the first request and the location performance of the AI model may be sent simultaneously via the same message.

FIG. 6 shows a communication method according to an exemplary embodiment, which is performed by a terminal. As shown in FIG. 6, the method may include:
in S610, first information is sent to a location management function device via an LPP message, where the first information is configured to determine location performance of an AI model deployed by the terminal.

In the embodiments of the present disclosure, the terminal may send the LPP message to the location management function device, where the LPP message includes the first information.

By using the above method, the terminal may send the information configured to determine the location performance of the AI model deployed by the terminal to the location management function device via the LPP message.

In some embodiments, the LPP message for sending the first information may be an LPP location information response message.

In some embodiments, the terminal may send the information, that is configured to determine the location performance of the AI model deployed by the terminal, to the location management function device according to the request sent by the location management function device.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In some embodiments, each location information included in the first sub-information is associated with a first identifier, and the first identifier indicates a location algorithm used to determine the location information.

In some embodiments, the location measurement value included in the second sub-information and determined based on the AI model is associated with a second identifier, which indicates a location measurement value determined based on the AI model.

In some embodiments, the receiving the location performance of the AI model sent by the location management function device includes:
receiving information, sent by the location management function device, characterizing whether the AI model meets a preset location accuracy; or receiving information, sent by the location management function device, indicating the terminal to stop using the AI model; or receiving information, sent by the location management function device, indicating the terminal to stop replacing the AI model; or receiving information, sent by the location management function device, indicating the terminal to update a parameter of the AI model.

In some embodiments, the method of the present disclosure may further include a step of receiving the location performance of the AI model sent by the location management function device.

FIG. 7 shows a communication method according to an exemplary embodiment, which is performed by a terminal. As shown in FIG. 7, the method may include:
in S710, second information sent by the location management function device for updating a parameter of an AI model is received.
in S720, first information is sent to a location management function device, where the first information is configured to determine location performance of the AI model deployed by the terminal.

In the embodiments of the present disclosure, the location management function device may send the second information for updating the parameter of the AI model to the terminal, such that the terminal may receive the second information sent by the location management function device.

In some embodiments, the method of the present disclosure may further include a step of receiving the location performance of the AI model sent by the location management function device.

In the embodiments of the present disclosure, the location management function device may send the location performance of the AI model to the terminal, thereby facilitating the terminal to understand the location performance of the deployed AI model.

It should be noted that, in some embodiments, the step of receiving the location performance of the AI model sent by the location management function device may be included in step S710. That is, in some cases, the second information and the location performance of the AI model may be sent simultaneously via the same message.

In some cases, the AI model is a to-be-trained AI model, such as an initial AI model, that is, the AI model needs to be trained with sample data before being deployed for use. Thus, in some embodiments, after receiving the second information sent by the location management function device, the terminal may use the second information to train the to-be-trained AI model, i.e., update the parameter of the to-be-trained AI model using the second information, thereby obtaining the AI model deployed by the terminal. After obtaining the AI model deployed by the terminal, the terminal may calculate the corresponding data based on the AI model to form the first information, such that that the terminal may subsequently send the first information to the location management function device.

In addition, in other cases, after the AI model is trained with the sample data and deployed for use, there may be a situation where the performance does not meet the actual use requirement. In such cases, the parameter of the deployed AI model may need to be optimized and updated. Thus, in some other embodiments, after receiving the second information sent by the location management function device, the parameter of the AI model deployed by the terminal may be optimized and updated using the second information, i.e., the parameter of the deployed AI model may be updated using the second information, thereby obtaining the AI model with the updated parameter deployed by the terminal.

It should be noted that, in the embodiments of the present disclosure, the timing at which the terminal receives the second information sent by the location management function device for updating the parameter of the AI model is not limited. For example, the second information may be received before the first information is sent to the location management function device. For another example, the second information may also be received at the same time as receiving the location performance of the AI model sent by the location management function device, or after receiving the location performance of the AI model sent by the location management function device.

Similarly, the timing at which the location management function device sends the second information is not limited. For example, the location management function device may send the second information to the terminal before the terminal sends the first information to the location management function device. For another example, the location management function device may send the second information to the terminal when the location management function device receives the first information sent by the terminal and determines, according to the first information, that the location performance of the terminal does not meet the requirement.

In some embodiments, the second information includes at least one of following: a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

When the second information includes the corresponding relationship between the location measurement value and the location information of the terminal, the AI model obtained by training takes the location measurement value as an input and the location information of the terminal as an output when used.

When the second information includes the corresponding relationship between the location measurement value determined based on the traditional location algorithm and the location measurement value determined based on the AI model, the AI model obtained by training takes the location measurement value determined based on the traditional location algorithm as an input and the location measurement value determined based on the AI model as an output when used.

When the second information includes the corresponding relationship between the channel impulse response and the location information of the terminal, the AI model obtained by training takes the channel impulse response as an input and the location information of the terminal as an output when used.

When the second information includes the corresponding relationship between the channel impulse response and the location measurement value, the AI model obtained by training takes the channel impulse response as an input and the location measurement value as an output when used.

In addition, the implementation details related to step S720 in the embodiments of the present disclosure may refer to the previously described embodiments and will not be repeated here.

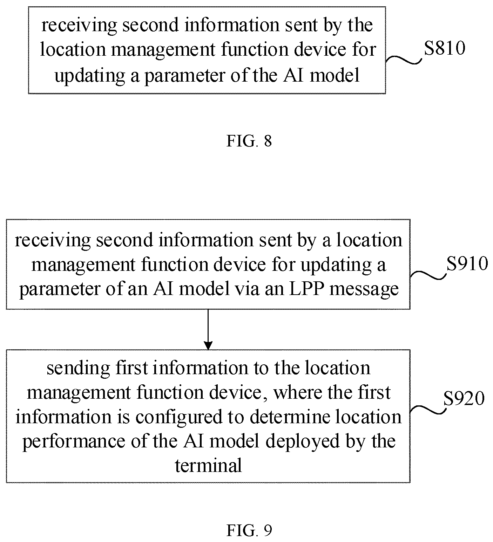

FIG. 8 shows a communication method according to an exemplary embodiment, which is performed by a terminal. As shown in FIG. 8, the method may include:
in S810, second information sent by the location management function device for updating a parameter of the AI model is received.

By using the above method, the terminal may receive the second information sent by the location management function device for updating the parameter of the AI model, such that the terminal may subsequently update the parameter of the AI model.

The timing at which the parameter of the AI model is updated and the timing at which the second information is received may refer to the previously described embodiments and will not be repeated here.

FIG. 9 shows a communication method according to an exemplary embodiment, which is performed by a terminal. As shown in FIG. 9, the method may include:
in S910, second information sent by a location management function device for updating a parameter of an AI model is received via an LPP message.
in S920, first information is sent to the location management function device, where the first information is configured to determine location performance of the AI model deployed by the terminal.

In the embodiments of the present disclosure, the location management function device may send the LPP message to the terminal, and the LPP message includes the second information. That is, by using the above method, the terminal may receive the second information sent by the location management function device via the LPP message.

Optionally, the LPP message for sending the second information may be an LPP assistance information response message.

In some embodiments, the second information includes at least one of following: a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

In addition, the relevant description of the timing at which the location management function device sends the second information and the relevant description of the terminal updating the AI model based on the second information in the embodiments of the present disclosure may refer to the previously described embodiments and will not be repeated here.

In addition, the implementation details related to step S920 in the embodiments of the present disclosure may refer to the previously described embodiments and will not be repeated here.

In some embodiments, the method of the present disclosure may further include a step of receiving the location performance of the AI model sent by the location management function device.

It should be noted that, in some embodiments, the step of receiving the location performance of the AI model sent by the location management function device may be included in step S910. That is, in some cases, the second information and the location performance of the AI model may be sent simultaneously via the same LPP message.

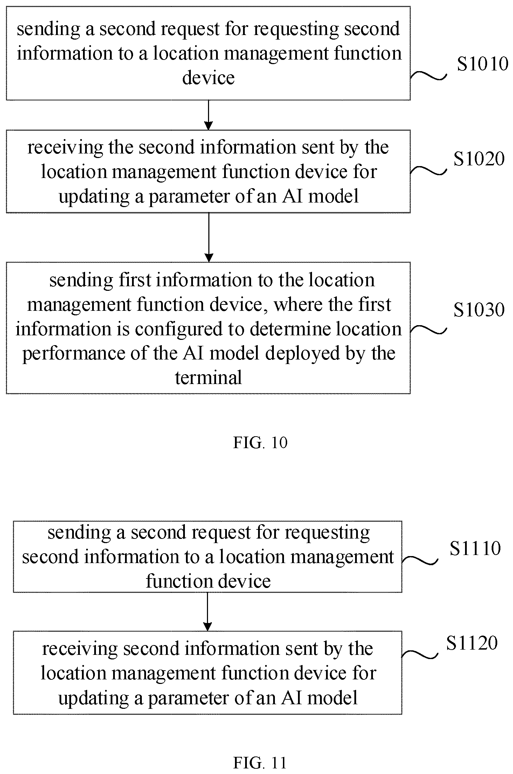

FIG. 10 shows a communication method according to an exemplary embodiment, which is performed by a terminal. As shown in FIG. 10, the method may include:
in S1010, a second request for requesting second information is sent to a location management function device.
in S 1020, the second information sent by the location management function device for updating a parameter of an AI model is received.
in S1030, first information is sent to the location management function device, where the first information is configured to determine location performance of the AI model deployed by the terminal.

By using the above method, the terminal may send the second request to the location management function device, such that the location management function device may send the second information to the terminal in response to the second request, and the terminal may receive the second information sent by the location management function device.

In some embodiments, the terminal may send the second request to the location management function device via the LPP message. That is, the terminal may send the LPP message to the location management function device, and the LPP message includes the second request.

Optionally, the LPP message for sending the second request may be an LPP request assistance information message.

In some embodiments, the terminal may receive the second information sent by the location management function device via the LPP message. Optionally, the LPP message for sending the second information may be an LPP provide assistance information message.

In some embodiments, the second information includes at least one of following: a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

It should be noted that, in the embodiments of the present disclosure, there is no limitation on the timing at which the terminal sends the second request to the location management function device. For example, the second request may be sent before sending the first information to the location management function device. For another example, the second request may also be sent after the location performance of the AI model sent by the location management function device is received. Thus, the location management function device may send the second information to the terminal in response to the second request.

In some embodiments, the method of the present disclosure may further include a step of receiving the location performance of the AI model sent by the location management function device.

It should be noted that, in some embodiments, the step of receiving the location performance of the AI model sent by the location management function device may be included in step S1020. That is, in some cases, the second information and the location performance of the AI model may be sent simultaneously via the same message.

In addition, the description regarding the terminal updating the AI model based on the second information in the embodiments of the present disclosure may refer to the previously described embodiments and will not be repeated here.

In addition, the implementation details related to step S1030 in the embodiments of the present disclosure may refer to the previously described embodiments and will not be repeated here.

FIG. 11 shows a communication method according to an exemplary embodiment, which is performed by a terminal. As shown in FIG. 11, the method may include:
in S1110, a second request for requesting second information is sent to a location management function device.
in S1120, second information sent by the location management function device for updating a parameter of an AI model is received.

By using the above method, the terminal may send the second request to the location management function device, such that the location management function device may send the second information to the terminal in response to the second request.

By using the above method, the terminal may send the second request to the location management function device, such that the location management function device may send the second information to the terminal in response to the second request.

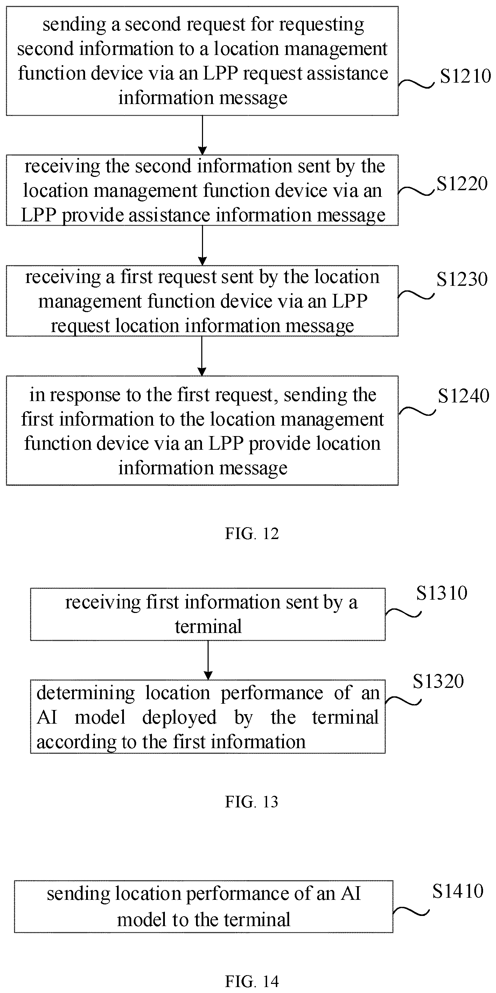

FIG. 12 shows a communication method according to an exemplary embodiment, which is performed by a terminal. As shown in FIG. 12, the method may include:
in S1210, a second request for requesting second information is sent to a location management function device via an LPP request assistance information message.

The second information is configured to update a parameter of an AI model.

in S1220, the second information sent by the location management function device is received via an LPP provide assistance information message.

in S1230, a first request sent by the location management function device is received via an LPP request location information message.

in S1240, in response to the first request, the first information is sent to the location management function device via an LPP provide location information message.

In some embodiments, the method of the present disclosure may further include a step of receiving the location performance of the AI model sent by the location management function device.

In the embodiments of the present disclosure, the location management function device may send the location performance of the AI model to the terminal, thereby facilitating the terminal to understand the location performance of the deployed AI model.

It should be noted that, in some embodiments, the step of receiving the location performance of the AI model sent by the location management function device may be included in step S1220 or step S 1230. That is, in some cases, the second information and the location performance of the AI model may be sent simultaneously via the same message, or the first request and the location performance of the AI model may be sent simultaneously via the same message.

FIG. 13 shows a communication method according to an exemplary embodiment, which may be performed by a location management function device in the above communication system. As shown in FIG. 13, the method may include:
in S13 10, first information sent by a terminal is received.
in S1320, location performance of an AI model deployed by the terminal is determined according to the first information.

By using the above method, the location management function device may receive the first information sent by the terminal, determine the location performance of the AI model deployed by the terminal according to the first information, and thus the location management function device may acquire the location performance of the AI model deployed by the terminal.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In the embodiments of the present disclosure, the AI model for determining the location information of the terminal may be deployed by the terminal, or the AI model for determining the location measurement value for detection of the terminal may be deployed by the terminal. In addition, the traditional location algorithm may also be deployed by the terminal, such as DL-TDOA, multi-RTT, DL-AOD, or E-CID location algorithm and the like. In this way, the terminal may determine the location information of the terminal based on the AI model and determine the location information of the terminal based on the traditional location algorithm according to the deployment of the AI model and the traditional location algorithm, so as to obtain the first sub-information; or the terminal may determine the location measurement value based on the AI model and the location measurement value based on the traditional location algorithm according to the deployment of the AI model and the traditional location algorithm, so as to obtain the second sub-information.

The location measurement value may be, for example, a reference signal arrival time difference (Reference Signal Time Difference, RSTD), a Reference Signal Received Power (RSRP), a positioning Reference Signal Received Path Power (RSRPP), and the like, which are determined based on the deployed traditional location algorithm.

In addition, after determining the location information of the terminal based on the AI model and the location information of the terminal based on the traditional location algorithm, the terminal may further determine information characterizing a difference between the location information of the terminal determined based on the AI model and the location information of the terminal determined based on the traditional location algorithm, so as to obtain the third sub-information.

For example, a distance between the location information of the terminal determined based on the AI model and the location information of the terminal determined based on the traditional location algorithm may be determined as information characterizing the difference.

In addition, after determining the location measurement value of the terminal based on the AI model and determining the location measurement value of the terminal based on the traditional location algorithm, the terminal may further determine information characterizing the difference between the location measurement value of the terminal determined based on the AI model and the location measurement value of the terminal determined based on the traditional location algorithm, so as to obtain the fourth sub-information.

For example, a difference value between the location measurement value of the terminal determined based on the AI model and the location measurement value of the terminal determined based on the traditional location algorithm may be determined as the information characterizing the difference.

In some embodiments, the first information sent by the terminal may at least include fields recording the first sub-information, second sub-information, third sub-information, and fourth sub-information. Thus, when it is necessary to send specific sub-information to the location management function device, a corresponding field is enabled to populate the corresponding sub-information.

In some embodiments, when the first information includes the first sub-information, the location management function device may acquire a first distance of the location information of the terminal determined based on the traditional location algorithm and the location information of the terminal determined based on the AI model. By comparing the first distance with a first threshold, it may determine whether the location performance of the AI model deployed by the terminal meets the requirement.

In some embodiments, when the first information includes the second sub-information, optionally, the location management function device may acquire a difference value between the location measurement value determined based on the AI model and the location measurement value determined based on the traditional location algorithm, and compare the difference value with a second threshold to determine whether the location performance of the AI model deployed by the terminal meets the requirement. Optionally, the location management function device may calculate to obtain the location information of the terminal based on the location measurement value determined by the AI model, calculate to obtain the location information of the terminal based on the location measurement value determined by traditional location algorithm, and then acquire a second distance between the two calculated location information. By comparing the second distance with a third threshold, it may determine whether the location performance of the AI model deployed by the terminal meets the requirement.

In some embodiments, when the first information includes the third sub-information, the location management function device may compare the third sub-information with a fourth threshold to determine whether the location performance of the AI model deployed by the terminal meets the requirement.

In some embodiments, when the first information includes the fourth sub-information, the location management function device may compare the fourth sub-information with a fifth threshold to determine whether the location performance of the AI model deployed by the terminal meets the requirement.

In some embodiments, when the first distance is less than the first threshold, it is determined that the location performance meets the requirement, otherwise the location performance does not meet the requirements.

In some embodiments, when the difference value is less than the second threshold, it is determined that the location performance meets the requirement, otherwise the location performance does not meet the requirement.

In some embodiments, when the second distance is less than the third threshold, it is determined that the location performance meets the requirement, otherwise the location performance does not meet the requirement.

In some embodiments, when the third sub-information is less than the fourth threshold, it is determined that the location performance meets the requirement, otherwise the location performance does not meet the requirement.

In some embodiments, when the fourth sub-information is less than the fifth threshold, it is determined that the location performance meets the requirement, otherwise the location performance does not meet the requirement.

In addition, in order to enable the location management function device to distinguish the location information obtained by which algorithm, in some embodiments, each location information included in the first sub-information is associated with a first identifier, and the first identifier indicates a location algorithm used to determine the location information.

For example, the location information determined through the AI model may be tagged with a first identifier which indicates that the location information is determined by the AI model. For another example, the location information determined through a DL-TDOA location algorithm may be tagged with a first identifier, which indicates that the location information is determined by the DL-TDOA location algorithm.

In addition, in order to enable the location management function device to distinguish the location measurement value obtained by which algorithm, in some embodiments, the location measurement value included in the second sub-information and determined based on the AI model is associated with a second identifier, which indicates a location measurement value determined based on the AI model.

In the embodiments of the present disclosure, considering a significant difference in parameter units or orders of magnitudes between different location measurement values, the second identifier may only be associated with the location measurement value determined based on the AI model included in the second sub-information.

In some embodiments, the method of the present disclosure may further include the step of sending the location performance of the AI model to the terminal.

Optionally, the location performance may be whether a location accuracy meets the requirement. Thus, in some embodiments, the sending the location performance of the AI model to the terminal includes:

sending information characterizing whether the AI model meets a preset location accuracy to the terminal; or sending information indicating the terminal to stop using the AI model to the terminal; or sending information indicating the terminal to stop replacing the AI model to the terminal; or sending information indicating the terminal to update a parameter of the AI model to the terminal.

FIG. 14 shows a communication method according to an exemplary embodiment, which is performed by a location management function device. In this case, as shown in FIG. 14, the method may include:
in S 1410, location performance of an AI model is sent to the terminal.

By using the above method, the location management function device may send the location performance of the AI model to the terminal.

The location performance of the AI model sent to the terminal by the location management function device may be obtained in various ways. Optionally, the location management function device may analyze and process the first information after receiving the first information configured to determine the location performance of the AI model and sent by the terminal, to determine the location performance. Optionally, the location management function device may also acquire the location performance of the terminal from an external application.

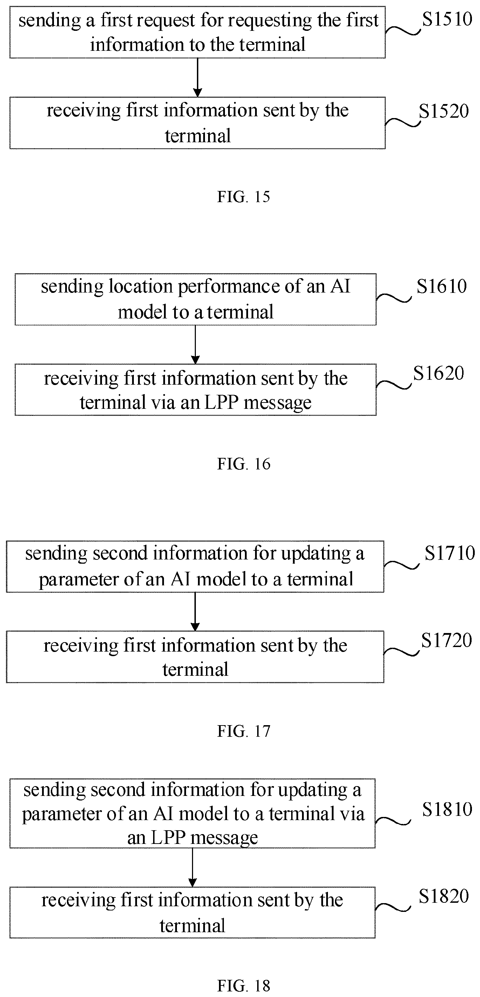

FIG. 15 shows a communication method according to an exemplary embodiment, which is performed by a location management function device. In this case, as shown in FIG. 15, the method may include:
S1510, a first request for requesting the first information is sent to the terminal.
S1520, first information sent by the terminal is received.

By using the above method, the location management function device may send the first request to the terminal, such that the terminal may send the first information to the location management function device according to the first request sent by the location management function device.

In some embodiments, the location management function device may send the location performance of the AI model to the terminal after determining the location performance of the AI model deployed by the terminal.

The location performance of the AI model sent to the terminal by the location management function may be obtained in various ways. Optionally, the location management function device may analyze and process the first information which is sent by the terminal and configured to determine the location performance of the AI model after receiving the first information, to determine the location performance. That is, the location management function device may determine the location performance of the AI model deployed by the terminal according to the first information. Optionally, the location management function device may also obtain the location performance of the terminal from an external application.

In some embodiments, the first request and the location performance of the AI model may be sent through the same message.

In some embodiments, the first request may include information indicating content of a specific request.

For example, the first request may include information for indicating that the terminal provides at least one of the first sub-information, second sub-information, third sub-information, or fourth sub-information.

In some embodiments, the location management function device may send the first request to the terminal through an LPP message, and that is, the location management function device may send the LPP message to the terminal, and the LPP message includes the first request.

Optionally, the LPP message for sending the first request may be an LPP location information request message.

In some embodiments, after acquiring the location performance of the deployed AI model, the terminal may perform subsequent processing. For example, when it is determined that the location performance does not meet the requirement, a parameter of the AI model may be updated, for another example, the deployed AI model may be used to determine location information of the terminal or may be used to determine a location measurement value of the terminal.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In addition, in order to enable the location management function device to distinguish the location information obtained by which algorithm, in some embodiments, each location information included in the first sub-information is associated with a first identifier, and the first identifier indicates a location algorithm used to determine the location information.

In addition, in order to enable the location management function device to distinguish the location measurement value obtained by which algorithm, in some embodiments, the location measurement value included in the second sub-information and determined based on the AI model is associated with a second identifier, which indicates a location measurement value determined based on the AI model.

FIG. 16 shows a communication method according to an exemplary embodiment, which is performed by a location management function device. In this case, as shown in FIG. 16, the method may include:
in S1610, location performance of an AI model is sent to a terminal.
in S 1620, first information sent by the terminal is received via an LPP message.

In the embodiments of the present disclosure, the terminal may send the LPP message to the location management function device, where the LPP message includes the first information.

In some embodiments, the location management function device may send the location performance of the AI model to the terminal after determining the location performance of the AI model deployed by the terminal.

The location performance of the AI model sent to the terminal by the location management function may be obtained in various ways. Optionally, the location management function device may analyze and process the first information which is sent by the terminal and configured to determine the location performance of the AI model after receiving the first information, to determine the location performance. That is, the location management function device may determine the location performance of the AI model deployed by the terminal according to the first information. Optionally, the location management function device may also obtain the location performance of the terminal from an external application.

FIG. 17 shows a communication method according to an exemplary embodiment, which is performed by a location management function device. In this case, as shown in FIG. 17, the method may include:
in S1710, second information for updating a parameter of an AI model is sent to a terminal.
in S 1720, first information sent by the terminal is received.

In the embodiments of the present disclosure, the location management function device may send the second information for updating the parameter of the AI model to the terminal, such that the terminal may receive the second information sent by the location management function device.

In some cases, the AI model is a to-be-trained AI model, such as an initial AI model, that is, the AI model needs to be trained with sample data before being deployed for use. Thus, in some embodiments, after receiving the second information sent by the location management function device, the terminal may use the second information to train the to-be-trained AI model, i.e., update the parameter of the to-be-trained AI model using the second information, thereby obtaining the AI model deployed by the terminal. After obtaining the AI model deployed by the terminal, the terminal may calculate the corresponding data based on the AI model to form the first information, such that that the terminal may subsequently send the first information to the location management function device.

In addition, in other cases, after the AI model is trained with the sample data and deployed for use, there may be a situation where the performance does not meet the actual use requirement. In such cases, the parameter of the deployed AI model may need to be optimized and updated. Thus, in some other embodiments, after receiving the second information sent by the location management function device, the parameter of the AI model deployed by the terminal may be optimized and updated using the second information, i.e., the parameter of the deployed AI model may be updated using the second information, thereby obtaining the AI model with the updated parameter deployed by the terminal.

It should be noted that in the embodiments of the present disclosure, the timing at which the location management function device sends the second information is not limited herein. For example, the location management function device may send the second information to the terminal before the terminal sends the first information to the location management function device. For another example, the location management function device may send the second information to the terminal when the location management function device receives the first information sent by the terminal and determines, according to the first information, that the location performance of the terminal does not meet the requirement.

In some embodiments, the second information includes at least one of following: a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

When the second information includes the corresponding relationship between the location measurement value and the location information of the terminal, the AI model obtained by training takes the location measurement value as an input and the location information of the terminal as an output when used.

When the second information includes the corresponding relationship between the location measurement value determined based on the traditional location algorithm and the location measurement value determined based on the AI model, the AI model obtained by training takes the location measurement value determined based on the traditional location algorithm as an input and the location measurement value determined based on the AI model as an output when used.

When the second information includes the corresponding relationship between the channel impulse response and the location information of the terminal, the AI model obtained by training takes the channel impulse response as an input and the location information of the terminal as an output when used.

When the second information includes the corresponding relationship between the channel impulse response and the location measurement value, the AI model obtained by training takes the channel impulse response as an input and the location measurement value as an output when used.

In some embodiments, the location management function device may send the location performance of the AI model to the terminal after determining the location performance of the AI model deployed by the terminal.

The location performance of the AI model sent to the terminal by the location management function may be obtained in various ways. Optionally, the location management function device may analyze and process the first information which is sent by the terminal and configured to determine the location performance of the AI model after receiving the first information, to determine the location performance. That is, the location management function device may determine the location performance of the AI model deployed by the terminal according to the first information. Optionally, the location management function device may also obtain the location performance of the terminal from an external application.

In some embodiments, the second information and the location performance of the AI model may be sent via the same message.

FIG. 18 shows a communication method according to an exemplary embodiment, which is performed by a location management function device. In this case, as shown in FIG. 18, the method may include:
in S1810, second information for updating a parameter of an AI model is sent to a terminal via an LPP message.
in S 1820, first information sent by the terminal is received.

In the embodiments of the present disclosure, the location management function device may send the LPP message to the terminal, and the LPP message includes the second information.

Optionally, the LPP message for sending the second information may be an LPP provide assistance information message.

In some embodiments, the second information includes at least one of following: a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

In some embodiments, the location management function device may send the location performance of the AI model to the terminal after determining the location performance of the AI model deployed by the terminal.

The location performance of the AI model sent to the terminal by the location management function may be obtained in various ways. Optionally, the location management function device may analyze and process the first information which is sent by the terminal and configured to determine the location performance of the AI model after receiving the first information, to determine the location performance. That is, the location management function device may determine the location performance of the AI model deployed by the terminal according to the first information. Optionally, the location management function device may also obtain the location performance of the terminal from an external application.

In some embodiments, the second information and the location performance of the AI model may be sent via the same message.

In addition, the relevant description of the timing at which the location management function device sends the second information and the relevant description of the terminal updating the AI model based on the second information in the embodiments of the present disclosure may refer to the previously described embodiments and will not be repeated here.

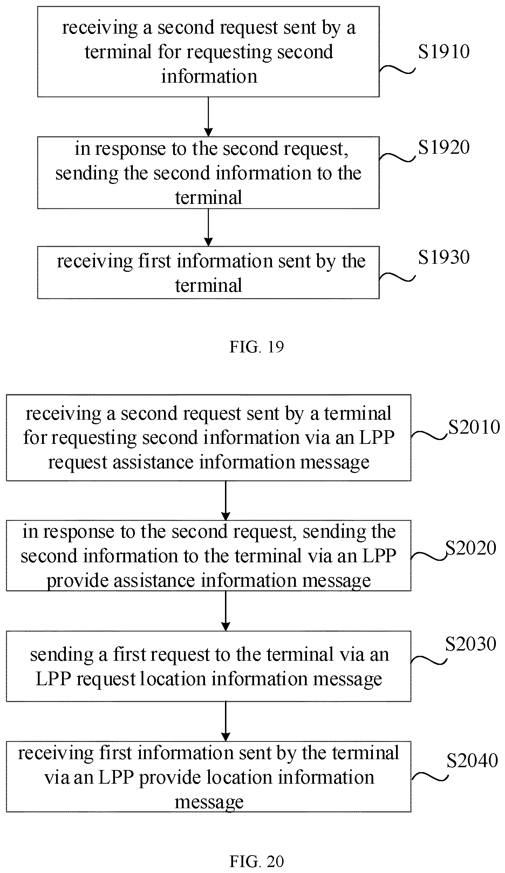

FIG. 19 shows a communication method according to an exemplary embodiment, which is performed by a location management function device, in this case, as shown in FIG. 19, the method may include:
in S1910, a second request sent by a terminal for requesting second information is received.
in S 1920, in response to the second request, the second information is sent to the terminal.
in S 1930, first information sent by the terminal is received.

By using the above method, the terminal may send the second request to the location management function device to request the second information, such that the location management function device may send the second information to the terminal in response to the second request.

In some embodiments, the terminal may send the second request to the location management function device via the LPP message. That is, the terminal may send the LPP message to the location management function device, and the LPP message includes the second request. Thus, the location management function device may receive the second request sent by the terminal via the LPP message.

Optionally, the LPP message for sending the second request may be an LPP request assistance information message.

In some embodiments, the location management function device may send the second information to the terminal via the LPP message. Optionally, the LPP message for sending the second information may be the LPP provide assistance information message.

In some embodiments, the second information includes at least one of following: a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

In addition, the relevant description of the timing at which the location management function device sends the second information and the relevant description of the terminal updating the AI model based on the second information in the embodiments of the present disclosure may refer to the previously described embodiments and will not be repeated here.

In some embodiments, the location management function device may send the location performance of the AI model to the terminal after determining the location performance of the AI model deployed by the terminal.

The location performance of the AI model sent to the terminal by the location management function may be obtained in various ways. Optionally, the location management function device may analyze and process the first information which is sent by the terminal and configured to determine the location performance of the AI model after receiving the first information, to determine the location performance. That is, the location management function device may determine the location performance of the AI model deployed by the terminal according to the first information. Optionally, the location management function device may also obtain the location performance of the terminal from an external application.

In some embodiments, the second information and the location performance of the AI model may be sent via the same message.

FIG. 20 shows a communication method according to an exemplary embodiment, which is performed by a location management function device. In this case, as shown in FIG. 20, the method may include:
in S2010, a second request sent by a terminal for requesting second information is received via an LPP request assistance information message.

The second information is configured to update a parameter of an AI model.

in S2020, in response to the second request, the second information is sent to the terminal via an LPP provide assistance information message.

in S2030, a first request is sent to the terminal via an LPP request location information message.

in S2040, first information sent by the terminal is received via an LPP provide location information message.

In some embodiments, the location management function device may send the location performance of the AI model to the terminal after determining the location performance of the AI model deployed by the terminal.

The location performance of the AI model sent to the terminal by the location management function may be obtained in various ways. Optionally, the location management function device may analyze and process the first information which is sent by the terminal and configured to determine the location performance of the AI model after receiving the first information, to determine the location performance. That is, the location management function device may determine the location performance of the AI model deployed by the terminal according to the first information. Optionally, the location management function device may also obtain the location performance of the terminal from an external application.

In some embodiments, the second information and the location performance of the AI model may be sent via the same message, or the first request and the location performance of the AI model may be sent via the same message.

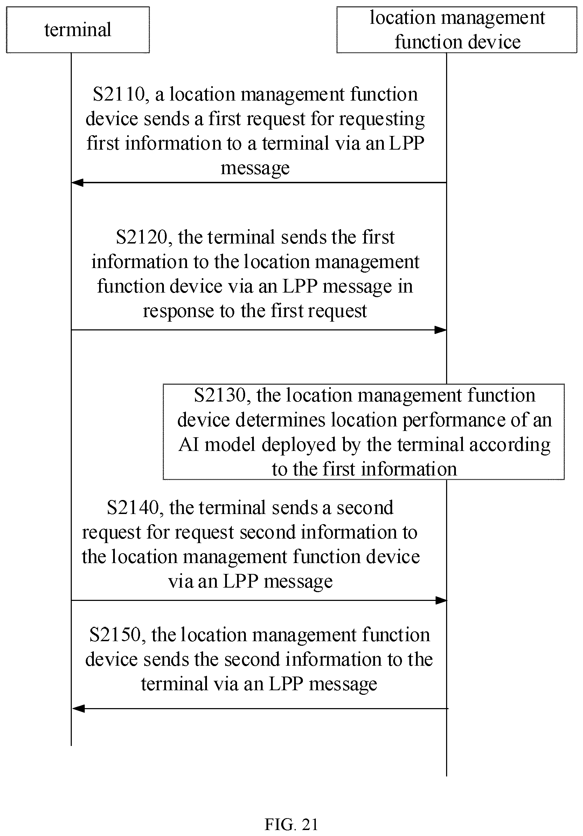

FIG. 21 shows a communication method according to an exemplary embodiment. As shown in FIG. 20, the communication method may include:
in S2110, a location management function device sends a first request for requesting first information to a terminal via an LPP message.

Optionally, the LPP message for sending the first request to the terminal may be an LPP request location information message.

in S2120, the terminal sends the first information to the location management function device via an LPP message in response to the first request.

Optionally, the LPP message for sending the first information to the location management function device may be an LPP provide location information message.

in S2130, the location management function device determines location performance of an AI model deployed by the terminal according to the first information.

in S2140, the terminal sends a second request for request second information to the location management function device via an LPP message.

Optionally, the LPP message for sending the second request to the location management function device may be an LPP request assistance information message.

in S2150, the location management function device sends the second information to the terminal via an LPP message.

Optionally, the LPP message for sending the second information to the terminal may be an LPP provide assistance information.

The second information is used for the terminal to update the parameter of the AI model deployed by the terminal.

In some embodiments, steps S2140 and S2150 may be performed before step S2110.

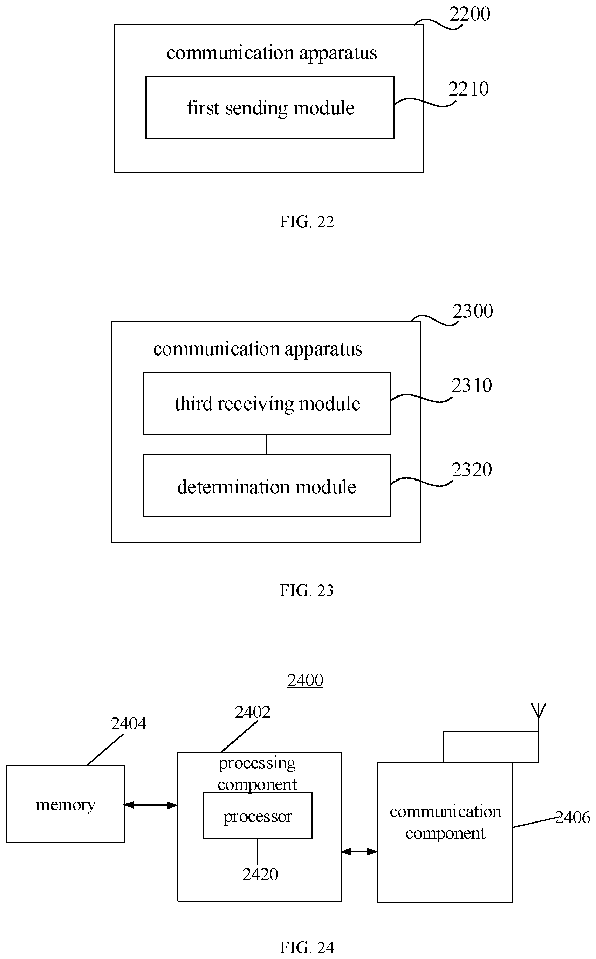

FIG. 22 is a block diagram of a communication apparatus 2200 according to an exemplary embodiment, which may be applied to a terminal. As shown in FIG. 22, the apparatus 2200 may include:
a first sending module 2210, configured to send first information to a location management function device, where the first information is configured to determine location performance of an AI model deployed by a terminal.

In some embodiments, the apparatus 2200 further includes:
a first receiving module, configured to receive the location performance of the AI model sent by the location management function device.

In some embodiments, the first sending module 2210 is further configured to receive a first request sent by the location management function device; and in response to the first request, send the first information to the location management function device.

In some embodiments, the first sending module 2210 is further configured to receive the first request sent by the location management function device via an LPP message; and in response to the first request, send the first information to the location management function device via an LPP message.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In some embodiments, each location information included in the first sub-information is associated with a first identifier, and the first identifier indicates a location algorithm used to determine the location information.

In some embodiments, the location measurement value, determined based on the AI model, included in the second sub-information is associated with a second identifier, and the second identifier indicates the location measurement value determined based on the AI model.

In some embodiments, the first receiving module is further configured to receive information characterizing whether the AI model meets a preset location accuracy sent by the location management function device; or may also be configured to receive information, sent by the location management function device, indicating that the terminal stops using the AI model; or may also be configured to receive information, sent by the location management function device, indicating that the terminal stops replacing the AI model; or may also be configured to receive information, sent by the location management function device, indicating the terminal to update a parameter of the AI model.

In some embodiments, the apparatus 2200 further includes:
a second receiving module, configured to receive second information sent by the location management function device for updating a parameter of the AI model.

In some embodiments, the second receiving module is further configured to receive the second information sent by the location management function device via an LPP message.

In some embodiments, the apparatus 2200 further includes:
a second sending module, configured to send a second request for requesting the second information to the location management function device.

In some embodiments, the second sending module is further configured to send the second request to the location management function device via an LPP message.

In some embodiments, where the second information includes at least one of a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

FIG. 23 is a block diagram of a communication apparatus 2300 according to an exemplary embodiment, which may be applied to a location management function device. As shown in FIG. 23, the apparatus 2300 may include:
a third receiving module 2310, configured to receive first information sent by a terminal;
a determination module 2320, configured to determine location performance of an AI model deployed by the terminal according to the first information.

In some embodiments, the apparatus 2300 further includes:
a third sending module, configured to send the location performance of the AI model to the terminal.

In some embodiments, the apparatus 2300 further includes:
a fourth sending module, configured to send a first request for requesting the first information to the terminal.

In some embodiments, the apparatus 2300 further includes:
a first request sending module, configured to send a first request for requesting the first information to the terminal via an LPP message; where in this case, the third receiving module 2310 is also configured to receive the first information sent by the terminal via an LPP message.

In some embodiments, the first information includes at least one of first sub-information, second sub-information, third sub-information, or fourth sub-information, where the first sub-information includes location information of the terminal determined based on the AI model and location information of the terminal determined based on a traditional location algorithm, the second sub-information includes a location measurement value determined based on the AI model and a location measurement value determined based on a traditional location algorithm, the third sub-information includes information characterizing a difference between location information of the terminal determined based on the AI model and location information of the terminal determined based on a traditional location algorithm, and the fourth sub-information includes information characterizing a difference between a location measurement value of the terminal determined based on the AI model and a location measurement value of the terminal determined based on a traditional location algorithm.

In some embodiments, each location information included in the first sub-information is associated with a first identifier, and the first identifier indicates a location algorithm used to determine the location information.

In some embodiments, the location measurement value, determined based on the AI model, included in the second sub-information is associated with a second identifier, and the second identifier indicates the location measurement value determined based on the AI model.

In some embodiments, the third sending module is further configured to send information that characterizes whether the AI model meets a preset location accuracy to the terminal; or configured to send information indicating that the terminal stops using the AI model to the terminal; or configured to send information indicating the terminal to stop replacing the AI model to the terminal; or configured to send information indicating the terminal to update a parameter of the AI model to the terminal.

In some embodiments, the apparatus 2300 further includes:
a fifth sending module, configured to send second information for updating the parameter of the AI model to the terminal.

In some embodiments, the fifth sending module is further configured to send the second information to the terminal via an LPP message.

In some embodiments, the fifth sending module is further configured to receive a second request sent by the terminal for requesting the second information; and in response to the second request, send the second information to the terminal.

In some embodiments, the apparatus 2300 further includes:
a fourth receiving module, configured to receive the second request sent by the terminal via an LPP message.

In some embodiments, where the second information includes at least one of a corresponding relationship between the location measurement value and the location information of the terminal, a corresponding relationship between the location measurement value determined based on the traditional location algorithm and the location measurement value determined based on the AI model, a corresponding relationship between a channel impulse response and the location measurement value, or a corresponding relationship between a channel impulse response and the location information of the terminal.

Regarding the apparatus in the above embodiments, the specific manners in which each module performs operations have been described in detail in the relevant embodiments of the method, and will not be repeated herein.

FIG. 24 is a block diagram of a communication apparatus according to an exemplary embodiment. The communication apparatus 2400 may be a location management function device in the communication system shown in FIG. 1. Referring to FIG. 24, the apparatus 2400 may include one or more of the following components: a processing component 2402, a memory 2404, and a communication component 2406.

The processing component 2402 typically controls overall operations of the apparatus 2400, such as operations associated with display, telephone calls, data communications, camera operations, and recording operations. The processing component 2402 may include one or more processors 2420 to execute instructions to complete all or part of the steps of the above communication method. In addition, the processing component 2402 may include one or more modules to facilitate interaction between the processing component 2402 and other components. For example, the processing component 2402 may include a multimedia module to facilitate interaction between the multimedia component and the processing component 2402.

The memory 2404 is configured to store various types of data to support the operation on the apparatus 2400. Examples of such data include instructions for any application or method operating on apparatus 2400, contact data, phonebook data, messages, pictures, videos, etc. The memory 2404 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The communication component 2406 is configured to facilitate wired or wireless communication between the apparatus 2400 and other devices. The apparatus 2400 may access a wireless network based on a communication standard, such as WiFi, 2G, 3G, 4G, 5G, 6G, NB-IOT, eMTC, and the like or a combination thereof. In an exemplary embodiment of the present disclosure, the communication component 2406 receives a broadcast signal or broadcast related information from an external broadcast management system via a broadcast channel. In an exemplary embodiment of the present disclosure, the communication component 2406 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

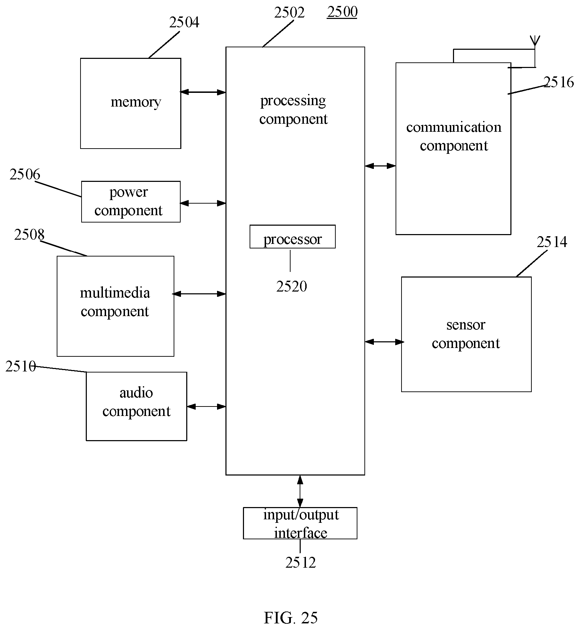

FIG. 25 is a block diagram of a communication apparatus according to an exemplary embodiment. For example, the communication apparatus 2500 may be a terminal in the communication system shown in FIG. 1, such as a mobile phone, camera, a laptop, a tablet computer, and a smart wearable device.

Referring to FIG. 25, the communication apparatus 2500 may include one or more of the following components: a processing component 2502, a memory 2504, a power component 2506, a multimedia component 2508, an audio component 2510, an input/output interface 2512, a sensor component 2514, and a communication component 2516.

The processing component 2502 typically controls overall operations of the communication apparatus 2500, such as operations associated with display, telephone calls, data communications, camera operations, and recording operations. The processing component 2502 may include one or more processors 2520 to execute instructions to complete all or part of the steps of the above communication method. In addition, the processing component 2502 may include one or more modules to facilitate interaction between the processing component 2502 and other components. For example, the processing component 2502 may include a multimedia module to facilitate interaction between the multimedia component and the processing component 2502.

The memory 2504 is configured to store various types of data to support the operation on the communication apparatus 2500. Examples of such data include instructions for any application or method operating on the communication apparatus 2500, contact data, phonebook data, messages, pictures, videos, etc. The memory 2504 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 2506 provides power to various components of the communication apparatus 2500. The power component 2506 may include a power management system, one or more power sources, and other components associated with generating, managing, and distributing power for the communication apparatus 2500.

The multimedia component 2508 includes a screen providing an output interface between the communication apparatus 2500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touching, sliding, and gestures on the touch panel. The touch sensor may not only sense a boundary of a touching or sliding action, but also detect a duration and pressure associated with the touching or sliding action. In some embodiments, the multimedia component 2508 includes a front camera and/or a rear camera. When the communication apparatus 2500 is in an operation mode, such as a photographing mode or a video mode, the front camera and/or the rear camera may receive external multimedia data. Each of the front camera and the rear camera may be a fixed optical lens system or have a focal length and an optical zoom capability.

The audio component 2510 is configured to output and/or input audio signals. For example, the audio component 2510 includes a microphone (MIC) configured to receive an external audio signal when the communication apparatus 2500 is in an operation mode, such as a call mode, a recording mode, and a speech recognition mode. The received audio signal may be further stored in the memory 2504 or transmitted via the communication component 2516. In some embodiments, the audio component 2510 further includes a speaker to output audio signals.

The input/output interface 2512 provides an interface between the processing component 2502 and a peripheral interface module, and the peripheral interface module may be a keyboard, a click wheel, a button, or the like. The button may include, but is not limited to, a home button, a volume button, a starting button, and a locking button.

The sensor component 2514 includes one or more sensors to provide status assessments of various aspects of the communication apparatus 2500. For example, the sensor component 2514 may detect the on/off state of the communication apparatus 2500, and the relative positioning of the components; for example, the components are the display and keypad of the communication apparatus 2500. The sensor component 2514 may also detect a position change of the communication apparatus 2500 or of one component of the communication apparatus 2500, the presence or absence of contact by the user with the communication apparatus 2500, the orientation or acceleration/deceleration of the communication apparatus 2500, and the temperature change of the communication apparatus 2500. The sensor component 2514 may include a proximity sensor configured to detect the presence of nearby objects without any physical contact. The sensor component 2514 may also include an optical sensor, such as a CMOS or CCD image sensor, for use in imaging applications. In some embodiments, the sensor component 2514 may further include an acceleration sensor, a gyroscope sensor, a magnetic sensor, a pressure sensor, or a temperature sensor.

The communication component 2516 is configured to facilitate wired or wireless communication between the communication apparatus 2500 and other devices. The communication apparatus 2500 may access a wireless network based on a communication standard, such as WiFi, 2G, or 3G, or a combination thereof. In an example embodiment, the communication component 2516 receives a broadcast signal or broadcast associated information from an external broadcast management system via a broadcast channel. In an example embodiment, the communication component 2516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the apparatus 2400 or apparatus 2500 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the above communication method.

The above-mentioned apparatus 2400 or apparatus 2500 may be an independent electronic device or a part of an independent electronic device. For example, in an embodiment, the electronic device may be an integrated circuit (IC) or a chip, where the integrated circuit may be an IC or a set of more than one IC. The chip may include, but is not limited to, a graphics processing unit (GPU), a central processing unit (CPU), a field programmable gate array (FPGA), a digital signal processor (DSP), an application specific integrated circuit (ASIC), a system on chip (SOC), or the like. The integrated circuit or chip may be configured to execute an executable instruction (or code) to implement the foregoing communication method. The executable instruction may be stored in the integrated circuit or the chip, or may be obtained from another apparatus or device. For example, the integrated circuit or the chip includes a processor, a memory, and an interface configured to communicate with another apparatus. The executable instruction may be stored in the processor, and when the executable instruction is executed by the processor, the foregoing communication method is implemented. Alternatively, the integrated circuit or chip may receive an executable instruction through the interface and transmit the executable instruction to the processor for execution, to implement the foregoing communication method.

In an exemplary embodiment, the present disclosure also provides a computer-readable storage medium storing computer program instructions that, when executed by a processor, implement the steps of the communication method provided in the present disclosure. For example, the computer-readable storage medium may be a non-temporary computer-readable storage medium including instructions, such as the aforementioned memory 2404 or 2504 including instructions that may be executed by the processor 2420 of the apparatus 2400 or the processor 2520 of the apparatus 2500 to implement the aforementioned communication method. For example, the non-temporary computer-readable storage medium may be a ROM, a random access memory (RAM), a CD-ROM, a magnetic tape, a floppy disk, an optical data storage device, and the like.

In another example embodiment, a computer program product is further provided. The computer program product includes a computer program executable by a programmable apparatus, and the computer program has a code portion for performing the communication method described above when the computer program is executed by the programmable apparatus.

Other embodiments of the present disclosure will be apparent to those skilled in the art from consideration of the description and practice of the present disclosure. The present disclosure is intended to cover any variations, uses, or adaptations of the present disclosure following the general principles of the present disclosure and including common general knowledge and conventional technical means in the art not disclosed in the present disclosure. It is intended that the description and examples are considered as examples only, with a true scope and spirit of the present disclosure being indicated by the following claims.

It should be understood that the present disclosure is not limited to the precise structures that have been described above and shown in the accompanying drawings, and various modifications and changes may be made without departing from the scope of the present disclosure. It is intended that the scope of the present disclosure is only limited by the appended claims.

## Claims

1. A communication method, performed by a terminal, comprising:
sending first information to a location management function device, wherein the first information is configured to determine location performance of an AI model deployed by the terminal.

2. The method according to claim 1, wherein the sending the first information to the location management function device comprises:
receiving a first request sent by the location management function device; and
sending, in response to the first request, the first information to the location management function device.

3. The method according to claim 1 or 2, wherein the sending the first information to the location management function device comprises:
receiving a first request sent by the location management function device via an LPP message; and
sending, in response to the first request, the first information to the location management function device via an LPP message.

4. The method according to claim 1, wherein the first information comprises at least one of first sub-information, second sub-information, third sub-information, or fourth sub-information, wherein the first sub-information comprises location information of the terminal determined based on the AI model and location information of the terminal determined based on a traditional location algorithm, the second sub-information comprises a location measurement value determined based on the AI model and a location measurement value determined based on a traditional location algorithm, the third sub-information comprises information characterizing a difference between location information of the terminal determined based on the AI model and location information of the terminal determined based on a traditional location algorithm, and the fourth sub-information comprises information characterizing a difference between a location measurement value of the terminal determined based on the AI model and a location measurement value of the terminal determined based on a traditional location algorithm.

5. The method according to claim 4, wherein each location information comprised in the first sub-information is associated with a first identifier, and the first identifier indicates a location algorithm used to determine the location information; and
the location measurement value, determined based on the AI model, comprised in the second sub-information is associated with a second identifier, and the second identifier indicates the location measurement value determined based on the AI model.

6. The method according to claim 1, further comprising:
receiving the location performance of the AI model sent by the location management function device.

7. The method according to claim 6, wherein the receiving the location performance of the AI model sent by the location management function device comprises:
receiving information, sent by the location management function device, characterizing whether the AI model meets a preset location accuracy; or
receiving information, sent by the location management function device, indicating the terminal to stop using the AI model; or
receiving information, sent by the location management function device, indicating the terminal to stop replacing the AI model; or
receiving information, sent by the location management function device, indicating the terminal to update a parameter of the AI model.

8. The method according to claim 1, further comprising:
receiving second information, sent by the location management function device, for updating a parameter of the AI model.

9. The method according to claim 8, wherein the receiving the second information sent by the location management function device for updating the parameter of the AI model comprises:
receiving the second information sent by the location management function device via an LPP message.

10. The method according to claim 8, further comprising:
sending a second request for requesting the second information to the location management function device.

11. The method according to claim 10, wherein the sending the second request for requesting the second information to the location management function device comprises:
sending the second request to the location management function device via an LPP message.

12. The method according to any one of claims 8 to 11, wherein the second information comprises at least one of a corresponding relationship between a location measurement value and location information of the terminal, a corresponding relationship between a location measurement value determined based on a traditional location algorithm and a location measurement value determined based on the AI model, a corresponding relationship between a channel impulse response and a location measurement value, or a corresponding relationship between a channel impulse response and location information of the terminal.

13. A communication method, performed by a location management function device, further comprising:
receiving first information sent by a terminal; and
determining, according to the first information, location performance of an AI model deployed by the terminal.

14. The method according to claim 13, further comprising:
sending a first request for requesting the first information to the terminal.

15. The method according to claim 13 or 14, further comprising:
sending a first request for requesting the first information to the terminal via an LPP message;
wherein the receiving first information sent by the terminal comprises:
receiving the first information sent by the terminal via an LPP message.

16. The method according to claim 13, wherein the first information comprises at least one of first sub-information, second sub-information, third sub-information, or fourth sub-information, wherein the first sub-information comprises location information of the terminal determined based on the AI model and location information of the terminal determined based on a traditional location algorithm, the second sub-information comprises a location measurement value determined based on the AI model and a location measurement value determined based on a traditional location algorithm, the third sub-information comprises information characterizing a difference between location information of the terminal determined based on the AI model and location information of the terminal determined based on a traditional location algorithm, and the fourth sub-information comprises information characterizing a difference between a location measurement value of the terminal determined based on the AI model and a location measurement value of the terminal determined based on a traditional location algorithm.

17. The method according to claim 16, wherein each location information comprised in the first sub-information is associated with a first identifier, and the first identifier indicates a location algorithm used to determine the location information; and
the location measurement value, determined based on the AI model, comprised in the second sub-information is associated with a second identifier, and the second identifier indicates the location measurement value determined based on the AI model.

18. The method according to claim 13, further comprising:
sending the location performance of the AI model to the terminal.

19. The method according to claim 18, wherein the sending the location performance of the AI model to the terminal comprises:
sending information characterizing whether the AI model meets a preset location accuracy to the terminal; or
sending information indicating the terminal to stop using the AI model to the terminal; or
sending information indicating the terminal to stop replacing the AI model to the terminal; or
sending information indicating the terminal to update a parameter of the AI model to the terminal.

20. The method according to claim 13, further comprising:
sending second information for updating a parameter of the AI model to the terminal.

21. The method according to claim 20, wherein the sending the second information for updating the parameter of the AI model to the terminal comprises:
sending the second information to the terminal via an LPP message.

22. The method according to claim 20, wherein the sending the second information for updating the parameter of the AI model to the terminal comprises:
receiving a second request, sent by the terminal, for requesting the second information; and
sending, in response to the second request, the second information to the terminal.

23. The method according to claim 22, wherein the receiving the second request, sent by the terminal, for requesting the second information comprises:
receiving the second request sent by the terminal via an LPP message.

24. The method according to any one of claims 20 to 23, wherein the second information comprises at least one of a corresponding relationship between a location measurement value and location information of the terminal, a corresponding relationship between a location measurement value determined based on a traditional location algorithm and a location measurement value determined based on the AI model, a corresponding relationship between a channel impulse response and a location measurement value, or a corresponding relationship between a channel impulse response and location information of the terminal.

25. A communication apparatus, applied to a terminal, comprising:
a first sending module, configured to send first information to a location management function device, wherein the first information is configured to determine location performance of an AI model deployed by the terminal; and
a first receiving module, configured to receive the location performance of the AI model sent by the location management function device.

26. A communication apparatus, applied to a location management function device, comprising:
a third receiving module, configured to receive first information sent by a terminal;
a determination module, configured to determine location performance of an AI model deployed by the terminal according to the first information; and
a third sending module, configured to send the location performance of the AI model to the terminal.

27. A communication apparatus, comprising:
a processor;
a memory for storing executable instructions of the processor;
wherein the processor is configured to perform the steps of the method according to any one of claims 1 to 12, or the processor is configured to perform the steps of the method according to any one of claims 13 to 24.

28. A computer-readable storage medium having computer program instructions stored thereon, wherein when the computer program instructions are executed by a processor, the steps of the method according to any one of claims 1 to 12 are implemented, or when the computer program instructions are executed by a processor, the steps of the method according to any one of claims 13 to 24 are implemented.

29. A chip comprising a processor and an interface; wherein the processor is configured to read instructions to perform the steps of the method according to any one of claims 1 to 12, or the processor is configured to read instructions to perform the steps of the method according to any one of claims 13 to 24.
